Europäisches Patentamt

European Patent Office

Office européen des brevets

(11) Veröffentlichungsnummer: **0 038 367**
**A1**

## (12) EUROPÄISCHE PATENTANMELDUNG

(21) Anmeldenummer: **80102054.6**

(22) Anmeldetag: **17.04.80**

(51) Int. Cl.³: **B 60 K 41/20**

(43) Veröffentlichungstag der Anmeldung:
**28.10.81 Patentblatt 81/43**

(84) Benannte Vertragsstaaten:
**AT BE DE FR GB IT NL SE**

(71) Anmelder: **Bilgeri, Josef**
**Obere-Waidstrasse 4**
**CH-8037 Zürich(CH)**

(72) Erfinder: **Bilgeri, Josef**
**Obere-Waidstrasse 4**
**CH-8037 Zürich(CH)**

(74) Vertreter: **Utiger, Heinrich, Prof. Dr. phil. et al,**
**David Hessweg 16 Postfach 145**
**CH-8060 Zürich(CH)**

(54) **Anordnung für die Bedienung von Beschleunigungs- und Bremsaggregaten.**

(57) In der Führerkabine, beispielsweise eines Automobils, ist gaspedalähnlich ein Bedienungsorgan (5) kippbar gelagert, derart, dass ein erster Hebelarm (9) und ein zweiter Hebelarm (11) gebildet werden. Einer der Hebelarme (9) wirkt auf das Beschleunigungsaggregat (19) des Fahrzeuges, der andere (11) auf das Bremsaggregat (23).

FIG. 1

- 1 -

## Anordnung für die Bedienung von Beschleunigungs- und Bremsaggregaten.

Die vorliegende Erfindung betrifft eine Anordnung für die Bedienung von Beschleunigungs- und Bremsaggregaten an einer durch einen Antriebsmotor getriebenen Vorrichtung.

Herkömmlicherweise weisen Kraftfahrzeuge, insbesondere Automobile ein Gas-, ein Brems- und ein Kupplungspedal auf, wobei der eine Fuss des Fahrzeugführers Gas und Bremse bedient, der andere das Kupplungspedal. Im normalen Fahrzustand, ohne Bremsbereitschaft erstellt zu haben, bedient der Fahrzeugführer das Gaspedal. Bei plötzlich auftretender Gefahrensituation, die ein brüskes Abbremsen erfordert, muss der nach Ablauf der individuellen Reaktionszeit den einen Fuss vom Gaspedal lösen, auf das Bremspedal überführen, um die notwendige Bremsung vorzunehmen.

Dadurch, dass die erste Bremsreaktion bei auftretender Gefahr sich unter Umständen erst in einer Kraftverstärkung auf das Gaspedal auswirkt, bevor die richtige Reaktion, nämlich entlasten des Gaspedalfusses, Ueberführen auf das Bremspedal und Krafteinwirkung auf das Bremspedal erfolgt, gehen wertvolle Sekundenbruchteile verloren bis die Bremsung eingeleitet wird. Dies trifft sowohl bei geschalteten Fahrzeugen, wie auch bei Fahrzeugen mit automatischen Getrieben zu, da auch Automaten in den meisten Fällen mit dem gleichen Fuss beschleunigt, wie auch abgebremst werden.

Die vorliegende Erfindung bezweckt eine Anordnung zu schaffen, welche die Reaktionszeit vom Moment der Gefahrenwahrnehmung bis zur Einleitung der entsprechenden Bremsung drastisch reduziert. Sie zeichnet sich zu diesem Zweck dadurch aus, dass ein Bedienungsorgan vorgesehen ist, das sowohl auf Beschleunigungs- wie auch auf Bremsaggregate wirkt, und zwar in Positionen diesseits einer Neutralposition auf die Beschleunigungs- und in Positionen jenseits der Neutralposition auf die Bremsaggregate.

- 3 -

Die Erfindung wird anschliessend beispielsweise anhand von Figuren erläutert. Es zeigen

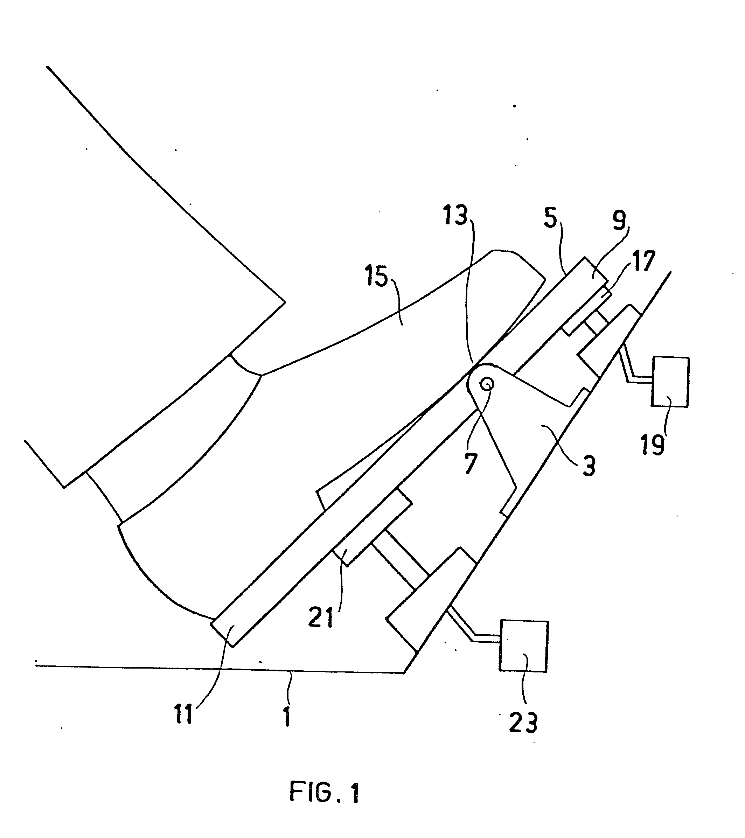

Fig. 1 ein Bedienungsorgan mit aufgelegtem Bedienungsfuss an einem Fahrzeug, beispielsweise einem Automobil,

Fig. 2 das Bedienungsorgan gemäss Fig. 1 mit Halterungen für den Fuss,

Fig. 3 eine Aufsicht auf ein Bedienungsorgan, welches zur Anpassung an die jeweilige Grösse des bedienenden Fusses verstellbar ist,

Fig. 4 eine Aufsicht auf das Bedienungsorgan, welches zur Anpassung an die jeweilige Grösse des bedienenden Fusses verstellbare, magnetisch gehaltene Halterungen aufweist,

Fig. 5 eine Teilansicht eines Schnittes gemäss Linien V - V durch das Organ gemäss Fig. 4,

Fig. 6 einen Schnitt gemäss Linien VI - VI durch das Organ von Fig. 4 .

- 4 -

In der Führerkabine mit einem Bodenblech 1, beispielsweise eines Automobils, ist gaspedalähnlich an Laschen 3 ein Bedienungsorgan 5 kippbar um eine Achse 7 gelagert, sodass ein erster Hebelarm 9 und ein zweiter Hebelarm 11 gebildet werden. Der erste Hebelarm 9 ist mit Bezug auf einen, auf das Bedienungsorgan 5 aufgelegten Fuss 15 eines Fahrzeugführers fussspitzen – wärts gerichtet, wogegen der zweite Hebelarm 11 fussfersenwärts gerichtet ist. Die Kippachse 7 ist dabei vorzugsweise im Bereich des Fussballens 13 des in bequemer Fahrposition aufgelegten Fusses 15 angeordnet. Vorzugsweise wirkt der erste, fussspitzenwärts gerichtete Hebelarm 9 beispielsweise über einen Stempel 17, auf ein lediglich schematisch dargestelltes Beschleunigungsaggregat 19 des Fahrzeugantriebmotors, während der zweite, fussfersenwärts gerichtete Hebelarm 11, wiederum z.B. über einen Stempel 21, auf das schematisch dargestellte Bremsaggregat 23 von Fahrzeug- und/oder Antriebsmotor wirkt. Je nach Aufbau von Gasgestängen resp. Bremsübertragung ist auch die Wirkverbindung zwischen den beiden Hebelarmen 9 resp. 11 auf die entsprechenden Aggregate 19,23 ausgebildet.

Durch die Tatsache, dass mit einem einzigen Bedienungsorgan 5 sowohl Beschleunigungs- wie auch Bremsaggregate betätigt werden, wird sichergestellt, dass bei Auftauchen der Gefahr der Fahrzeugführer nicht erst einen Pedalwechsel vorzunehmen braucht, um sein Fahrzeug abzubremsen. Durch die bevorzugte Anordnung, nämlich dass der Hebelarm 9, welcher fussspitzenwärts gerichtet ist, auf das Beschleunigungsaggregat 19 wirkt und der Hebelarm 11, welcher fussfersenwärts gerichtet ist, auf das Bremsorgan 23, wird weiter sichergestellt, dass ein Abstemmen des Fusses gegen die Bodenfläche 1 hin, als mögliche Schreckreaktion, unmittelbar eine Bremsung des Fahrzeuges bewirkt. Dadurch, dass die Achse 7 im Breich der Fussballe 13 angeordnet ist, wird sichergestellt, dass der Fuss eine bequeme Neutralposition einnehmen kann, in welcher weder Beschleunigungsaggregat 19 noch Bremsaggregat 23 betätigt werden. Durch die Wahl der Hebellängen von der Achse 7 bis zum Taster 17 resp. von der Achse 7 bis zum Taster 21, wird der Kraft- und Wegaufwand für die entsprechende Betätigung der erwähnten Organe mitbestimmt.

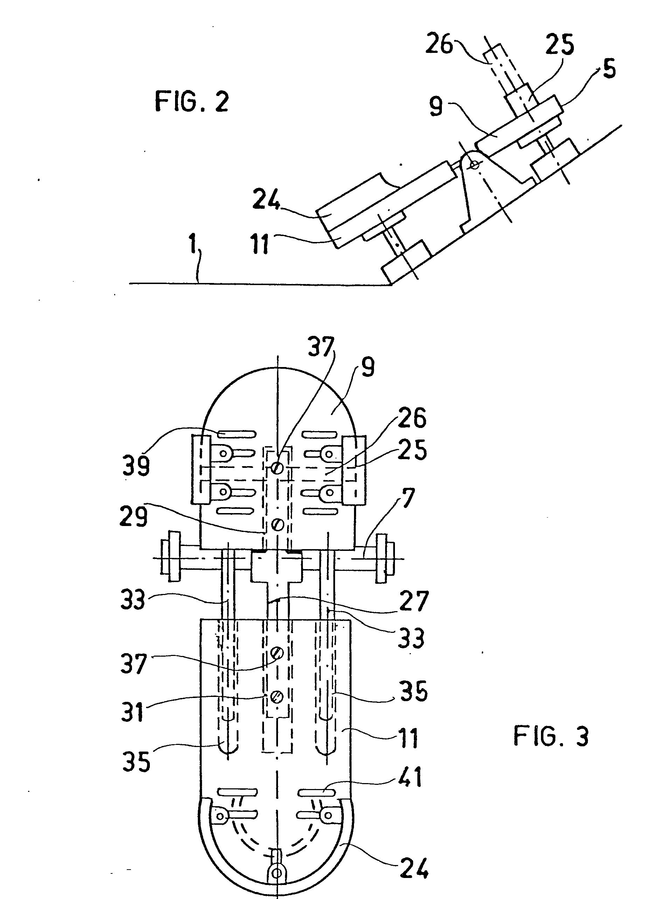

Um dem bedienenden Fuss einen sicheren Halt zu geben, wird gemäss Fig. 2 am Bedienungsorgan 5 eine Fersenhalterung 24, beispielsweise u-förmig um das Ende des Hebelarmes 11 gebogen, vorgesehen sowie beidseits des Bedienungsorganes 5 aufragende Fussspitzenhalterungen 25. Die Fussspitzenhalterungen 25 können auch, wie dies gestrichelt in Fig. 2 gezeigt ist, als geschlossener Bügel 27 ausgebildet sein.

- 6 -

Da eine optimale Einstellung der Längen für die Hebelarme 11 und 9 entsprechend der Fussgrösse des Fahrzeugführers wichtig ist, sind die beiden Hebelarme
9 und 11 gemäss Fig. 3 in ihrer Relativposition mit
Bezug auf die Kippachse 7 verstellbar ausgebildet. Zu
diesem Zweck ist auf der Achse 7 eine Arretierstange
27 fest angeordnet, welche in Führungen 29 resp. 31
in den beiden Hebelarmen 9 resp. 11 verschieblich gelagert ist. Zur Erhöhung der Stabilität sind weiter
beidseits der Arretierstange 27 Führungsstangen 33
vorgesehen, welche beispielsweise einerseits am Hebelarm 9 fest angeordnet sind und anderseits in ent -
sprechenden Führungen 35 im Hebelarm 11 gleiten. Die
beiden Hebelarme 9 und 11 werden mittels Schrauben 37
auf der Arretierstange 27 festgeschraubt. Gemäss Fig.
3 ist der Hebelarm 9 in seiner kürzesten Position arretiert. Durch Lösen der Schrauben 37 kann der jeweilige
Hebelarm mit Bezug auf die Wirkverbindungen mit den
Beschleunigungs- und Bremsaggregaten verstell werden,
indem die beiden Hebelarme 9 und 11 individuell mit
Bezug auf die Kippachse 7 eingestellt werden. Zur weiteren Berücksichtigung der Fussdimensionen sind gemäss Fig. 3 die Fussspitzenhalterungen 25 sowohl parallel zur Kippachse 7 in Schlitzen 39 verstellbar
festgeschraubt, wobei in Richtung Senkrecht zur Achse
7 eine Mehrzahl solcher Schlitze 39 vorgesehen ist, um

- 7 -

die Fussspitzenhalterungen 25 auch in dieser Richtung dem Fuss entsprechend verstellen zu können. Die Fersenhalterung 24 ist ebenfalls am Hebelarm 11 festgeschraubt, so dass verschiedene Fersengrössen berücksichtigt werden können, indem verschieden grosse u-Abschlüsse, wie dies gestrichelt angedeutet ist, festgeschraubt werden. Auch hier kann durch Vorsehen einer Mehrzahl von Befestigungsschlitzen 41 eine Verstellung der Fersenhalterung 24 in Richtung Senkrecht zur Kippachse 7 ermöglicht werden.

Das Bedienungsorgan 5 wird beispielsweise mittels Kugellagern an den Laschen 3 leichtgängig gelagert.

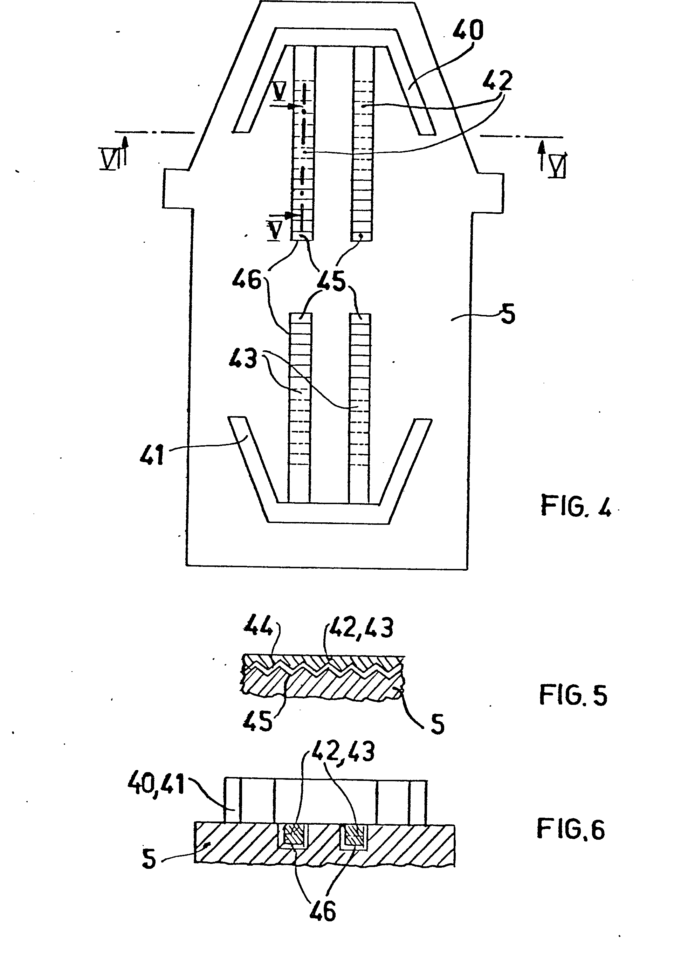

In den Fig. 4 - 6 sind auf dem Bedienungsorgan 5 wiederum, für Fussspitze und Fussferse, Halterungen 40, resp. 41 vorgesehen. Zur mühelosen Verstellung dieser Halterungen 40 und 41 sind an beiden je zwei Führungsstangen 42 resp. 43 angeordnet, welche auf ihrer dem Bedienungsorgan 5 zugekehrten Fläche, wie in Fig. 5 gezeigt ist, eine Zahnung 44 aufweisen, zum Eingriff in eine entsprechende Zahnung 45 in Führungskanälen 46 des Bedienungsorganes 5. Die Führungsstangen 42,43 und insbesondere ihre Zahnungen 44 sind aus magnetischem Material ausgebildet, ebenso wie die Zahnungen 45 der Führungskanäle 46. Die magnetische Fixierung der Halterungen 40 resp. 41 mit der entsprechen-

- 8 -

den Verzahnung reicht aus, um die Halterungen gegen die an ihnen auftretenden Beanspruchungen zu fixieren. Für die Verstellung werden die Führungsstangen 42,43 mit den daran angeordneten Halterungen 40,41 um eine entsprechende Anzahl Zähne verschoben und wieder in magnetischen Eingriff mit der Zahnung am Organ 5 gebracht.

- 1 -

Patentansprüche:

1. Anordnung für die Bedienung von Beschleunigungs-
und Bremsaggregaten an einer durch einen Antriebsmotor getriebenen Vorrichtung,
dadurch gekennzeichnet,
dass ein Bedienungsorgan (5) vorgesehen ist, das
sowohl auf Beschleunigungs- wie auch auf Bremsaggregate wirkt, und zwar in Positionen diesseits einer
Neutralposition auf die Beschleunigungs- und in
Positionen jenseits der Neutralposition auf die
Bremsaggregate (23).

2. Anordnung nach Anspruch 1,
dadurch gekennzeichnet,
dass das Bedienungsorgan (5) schwenkbar als zweiarmiger Hebel (9,11) ausgebildet ist, und dass der
eine Hebelarm (9) auf die Beschleunigungsaggregate
des Antriebmotors, der andere (11) auf Bremsaggregate wirkt.

3. Anordnung nach Anspruch 2,
dadurch gekennzeichnet,
dass das Bedienungsorgan (5) als Fusspedal ausgebildet ist, gaspedalähnlich in einer Führerkabine
angeordnet ist, und dass der Hebel durch Fussbedienung um eine Kippachse (7) kippar ist, wobei

- 2 -

der eine Hebelarm (9) fussfersenwärts, der andere fussspitzenwärts (11) angeordnet ist.

4. Anordnung nach Anspruch 3, dadurch gekennzeichnet, dass der Hebelarm (11) fussfersenwärts auf die Bremsaggregate (23), der Hebelarm (9) fussspitzenwärts auf die Beschleunigungsaggregate (17) wirkt.

5. Anordnung nach Anspruch 3, dadurch gekennzeichnet, dass die Kippachse (7) das Pedal in die zwei Hebelarme so unterteilt, dass ein aufgelegter Fuss (15) mit dem Bereich der Fussballe (13) über der Kippachse liegt.

6. Anordnung nach Anspruch 3, dadurch gekennzeichnet, dass das Bedienungsorgan Halterungen (24) für einen Bedienungsfuss aufweist.

7. Anordnung nach Anspruch 3, dadurch gekennzeichnet, dass die Längen der Hebelarme (9,11) verstellbar sind.

8. Anordnung nach Anspruch 6, dadurch gekennzeichnet,

- 3 -

dass die Halterungen (24,25) am Bedienungsorgan
verstellbar sind, für eine Anpassung an die Fussgrösse einer jeweiligen Bedienungsperson.

9. Anordnung nach Anspruch 6,
dadurch gekennzeichnet,
dass die Halterungen (40,41) am Bedienungsorgan
magnetisch befestigt sind.

FIG. 1

FIG. 2

FIG. 3

0038367

FIG. 4

FIG. 5

FIG. 6

0038367

**0038367**

| Europäisches Patentamt | **EUROPÄISCHER RECHERCHENBERICHT** | Nummer der Anmeldung |
|---|---|---|
| | | EP 80 10 2054.6 |

| EINSCHLÄGIGE DOKUMENTE | | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | DE - U - 7 109 417 (R. VERFÜRTH) <br> * ganze Schrift * <br> -- | 1-4,6, 7 | B 60 K 41/20 |
| X | FR - A - 1 289 503 (H.G. MONSCOURT) <br> * ganze Schrift * <br> -- | 1-4,6, 8 | |
| X | DE - U - 1 834 881 (HENSCHEL WERKE GMBH) <br> * Anspruch 1; Fig. * <br> -- | 1-6 | **RECHERCHIERTE SACHGEBIETE (Int. Cl.3)** |
| X | DE - A - 2 037 564 (DAIMLER-BENZ AG) <br> * Ansprüche; Fig. * <br> ---- | 1-4,6 | B 60 K 26/00 <br> B 60 K 41/00 <br> B 60 T 7/00 <br> G 05 G 1/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 30-10-1980 | LEITZ |

EPA form 1503.1  06.78